# EUROPÄISCHE PATENTSCHRIFT

(11) **EP 2 582 954 B1**
(45) Veröffentlichungstag und Bekanntmachung des Hinweises auf die Patenterteilung: **27.12.2017**
(21) Anmeldenummer: 11722794.2
(22) Anmeldetag: 25.05.2011
(51) Int. Cl.: F02B 37/16, F04D 25/04, F04D 27/00, F16K 31/40, F16K 31/42, F04D 27/02

(54) **AUFLADEVORRICHTUNG FÜR VERBRENNUNGSKRAFTMASCHINEN**
SUPERCHARGING APPARATUS FOR INTERNAL COMBUSTION ENGINES
DISPOSITIF DE SURALIMENTATION POUR MOTEURS À COMBUSTION INTERNE

(30) Priorität: 18.06.2010 DE 102010024297
(43) Veröffentlichungstag der Anmeldung: 24.04.2013
(73) Patentinhaber: Pierburg GmbH, 41460 Neuss (DE)
(72) Erfinder: ZURKE, Janusz, 47638 Straelen (DE); HERMANN, Max, 41468 Neuss (DE)
(74) Vertreter: Patentanwälte ter Smitten Eberlein-Van Hoof Rütten Partnerschaftsgesellschaft mbB
(86) Internationale Anmeldenummer: PCT/EP2011/058567
(87) Internationale Veröffentlichungsnummer: WO 2011/157521

(56) Entgegenhaltungen:
- DE-A1- 10 251 981
- DE-A1-102005 028 141
- DE-A1-102008 051 453
- DE-U- 1 943 708
- US-B1- 6 290 203

## Beschreibung

Die Erfindung betrifft eine Aufladeeinrichtung für Verbrennungskraftmaschinen mit einer Regelvorrichtung, welche an einem kanalbildenden Gehäuse eines als Rezirkulationskanal dienenden Bypasskanals zwischen der Druckseite und der Saugseite der Aufladeeinrichtung angeordnet ist, mit einem Elektromagnetventil und einem Bypassventil, welches ein erstes Gehäuseteil, über welches die Verbindung zum Rezirkulationskanal hergestellt ist und welches das Bypassventil seitlich begrenzt und ein zweites Gehäuseteil aufweist, welches als Deckel dient und das Bypassventil an der gegenüberliegenden Seite begrenzt, und einen pneumatisch betätigbaren Ventilschließkörper und einen Steuerdruckraum aufweist.

Aufladeeinrichtungen mit Regelvorrichtungen zur Rezirkulation von verdichtetem Verbrennungsgas von der Druckseite eines Verdichters eines Turboladers zurück zur Saugseite des Verdichters sind als Schubumluftventilvorrichtungen hinlänglich bekannt. Die Verbindung zwischen der Druckseite und der Saugseite des Verdichters durch eine Bypassleitung wird für den Übergang von einer hohen Last in den Schubbetrieb der Verbrennungskraftmaschine benötigt, um eine hohe Förderung der Ladedruckpumpe gegen eine geschlossene Drosselklappe und den daraus entstehenden Pumpeffekt sowie ein zu starkes plötzliches Absenken der Turbodrehzahl mit den Folgen thermodynamischer Probleme zu verhindern.

Schubumluftventile werden häufig elektromagnetisch betätigt, wobei der Ventilschließkörper des Ventils durch die elektromagnetische Kraft bewegt wird. Ein Beispiel einer solchen Anordnung wird in der DE 100 20 041 A1 beschrieben. Die Ansteuerung erfolgt über eine Steuereinheit entsprechend vorhandener Motordaten. Das Ventil weist eine Druckausgleichsöffnung am Ventilschließkörper auf, wodurch bei entsprechender Auslegung der wirksamen Flächen ein Kräftegleichgewicht bezüglich der pneumatischen Kräfte hergestellt wird. Nachteilig an diesen Ventilen ist jedoch die trotz der Druckausgeglichenheit des Ventils hohe erforderliche Stellkraft zur Betätigung des Ventilschließkörpers beim Öffnen, wodurch insbesondere bei großen zu schaltenden Querschnitten große Elektromagnete verwendet werden müssen. Gleichzeitig bestehen Beschränkungen bezüglich der erreichbaren Öffnungszeiten.

Zur Verringerung der notwendigen Magnetkraft wird in der DE 102 51 981 A1 vorgeschlagen, ein pneumatisch betätigtes Schubumluftventil vorzusehen, dessen Steuerdruckraum über ein Elektromagnetventil mit der Saugseite des Verdichters verbindbar ist. Dies führt zu einer Öffnung des Ventils. Die dafür verantwortliche Druckdifferenz sinkt jedoch im geöffneten Zustand, so dass ein ungewolltes Schließen des Ventils erfolgen kann.

Des Weiteren wird in der DE 10 2005 028 141 A1 ein Bypassventil für Verbrennungskraftmaschinen beschrieben, bei dem eine Öffnung des Ventilschließkörpers dadurch erzeugt wird, dass elektromagnetisch eine Dichtplatte von Öffnungen abgehoben wird, über die eine fluidische Verbindung des Steuerdruckraums zur Saugseite des Verdichters herstellbar ist. Zusätzlich besteht eine ständige Verbindung zwischen dem Steuerdruckraum und der Druckseite über eine Druckausgleichsöffnung im Ventilschließkörper. Da diese jedoch vom Querschnitt kleiner ist als die Öffnungen zur Saugseite, entsteht eine Kraft in Öffnungsrichtung, die zum Öffnen des Ventilschließkörpers führt. Jedoch liegt der Ventilschließkörper im geöffneten Zustand wieder an der Dichtplatte an, so dass sich ein Druckgleichgewicht am Ventilschließkörper einstellt. Dies kann zu einem ungewollten Schließen des Ventils aufgrund einer in Schließrichtung wirkenden Federkraft führen. Anschließend baut sich der Druck wieder auf, so dass das Ventil aufgrund der Druckdifferenz wieder öffnet. Es entsteht ein Regelkreis mit sich öffnendem und schließendem Ventil, was zu erhöhtem Verschleiß führt.

Des Weiteren sind aus der US 6,290,203 B1 oder der DE 1 943 708 U Vorsteuerventile bekannt, welche bei geöffnetem Magnetventil aufgrund einer Druckdifferenz zwischen den entgegengesetzten Seiten des Ventilkörpers des Regelventils öffnen. Aufgrund ihrer Anordnung im Kanal und der daraus folgenden Druckdifferenz am Ventilschließkörper sind diese Ventile als Schubumluftventile ungeeignet.

Aufgabe der vorliegenden Erfindung ist es daher, eine Aufladeeinrichtung mit einer Regelvorrichtung zu schaffen, mit der die oben genannten Nachteile vermieden werden und eine definierte Position des Ventilschließkörpers bei betätigtem Elektromagneten sichergestellt wird.

Diese Aufgabe wird durch eine Aufladeeinrichtung mit den Merkmalen des Hauptanspruchs gelöst.

Diese Regelvorrichtung der Aufladeeinrichtung ist an einem kanalbildenden Gehäuse eines als Rezirkulationskanal dienenden Bypasskanals zwischen der Druckseite und der Saugseite der Aufladeeinrichtung angeordnet. Sie besteht aus einem Elektromagnetventil und einem Bypassventil, welches ein erstes Gehäuseteil, über welches die Verbindung zum Rezirkulationskanal hergestellt ist und welches das Bypassventil seitlich begrenzt und ein zweites Gehäuseteil aufweist, welches als Deckel dient und das Bypassventil an der gegenüberliegenden Seite begrenzt und in dem eine Öffnung ausgebildet ist und einen pneumatisch betätigbaren Ventilschließkörper und einen Steuerdruckraum aufweist, wobei über einen freigebbaren Querschnitt des Elektromagnetventils eine fluidische Verbindung zwischen der Druckseite und der Saugseite der Aufladeeinrichtung oder der Atmosphäre über den Steuerdruckraum und die Öffnung im zweiten Gehäuseteil des Bypassventils herstellbar und verschließbar ist, wobei am Ventilschließkörper zumindest eine Öffnung ausgebildet ist, über die die fluidische Verbindung zwischen der Druckseite der Aufladeeinrichtung und dem Steuerdruckraum besteht und wobei der über das Elektromagnetventil freigebbare Querschnitt größer ist als ein Querschnitt der Öffnung am Ventilschließkörper. Im vollständig geöffneten Zustand des Bypassventils besteht zumindest zeitweise die fluidische Verbindung zwischen der Druckseite und der Saugseite der Aufladeeinrichtung oder der Atmosphäre über den Steuerdruckraum, die Öffnung im zweiten Gehäuseteil und den Querschnitt und durch Verschluss der fluidischen Verbindung über den Steuerdruckraum, die Öffnung im zweiten Gehäuseteil und den Querschnitt wirkt eine resultierende Kraft in Schließrichtung auf den Ventilschließkörper. Das Bypassventil ist dabei im geschlossenen Zustand druckausgeglichen, so dass die resultierende Kraft der auf den Ventilschließkörper wirkenden pneumatischen Kräfte bei geschlossenem Bypassventil gleich Null ist.

So wird erreicht, dass das Bypassventil definiert geöffnet und geschlossen werden kann. Ein unerwünschtes Schließen oder Pulsieren des Ventilschließkörpers wird zuverlässig vermieden. Auch wird sichergestellt, dass bei geöffneter fluidischer Verbindung zur Saugseite oder zur Atmosphäre der Druck im Steuerdruckraum immer geringer ist als der Druck unter dem Ventilschließkörper. Die fluidische Verbindung zur Druckseite weist dabei einen als Drossel wirkenden Querschnitt auf, der ein treibendes Druckgefälle verursacht. Die Öffnung am Ventilschließkörper dient dabei als Drossel oder Blende auf besonders einfache Weise. Die notwendigen Öffnungskräfte werden durch die Druckausgeglichenheit reduziert, so dass eine besonders schnelle Öffnung erreicht wird.

In einer bevorzugten Ausführung ist im geöffneten Zustand des Bypassventils über das Elektromagnetventil ein konstanter Querschnitt zwischen dem Steuerdruckraum und der Saugseite der Aufladeeinrichtung oder der Atmosphäre freigegeben, der größer ist als die zumindest eine Öffnung im Ventilschließkörper. So wird im geöffneten Zustand das Vorhandensein eines Druckgefälles sichergestellt und somit erneut ein unerwünschtes Schließen auf einfache Weise verhindert. Eine konstante Öffnung ermöglicht die Verwendung einfacher und kostengünstiger Elektromagnetventile.

Insbesondere ist es vorteilhaft, wenn das Elektromagnetventil ein elektrisches Umschaltventil ist. Diese ermöglichen sehr schnelle Öffnungszeiten und sind robust im Aufbau.

In einer besonders bevorzugten Ausführung ist der über das Elektromagnetventil freigebbare Querschnitt zwischen dem Steuerdruckraum und der Saugseite der Aufladeeinrichtung oder der Atmosphäre regelbar. Hierdurch kann eine kontinuierliche Regelung des Öffnungsquerschnitts des Bypassventils erreicht werden, da zu jeder Stellung des Ventilschließkörpers ein Druck und somit eine Kraft im Steuerdruckraum erzeugt werden kann der einer dieser Stellung entsprechenden Federkraft entspricht. So kann in jeder Stellung ein Kräftegleichgewicht hergestellt werden, so dass eine vollständige Regelbarkeit des Bypassventils erreicht wird.

Vorzugsweise ist dass das Elektromagnetventil ein elektropneumatischer Druckwandler mit einem Mischdruckanschluss und zwei weiteren Anschlüssen. Mit diesem lassen sich besonders gut die notwendigen Mischdrücke zur Regelung des Drucks im Steuerdruckraum und somit zur Regelung des Bypassventils realisieren.

Vorteilhafterweise ist der Mischdruckanschluss des elektropneumatischen Druckwandlers mit dem Steuerdruckraum des Bypassventils verbunden, der zweite Anschluss ist mit der Saugseite der Aufladeeinrichtung oder einem Atmosphärendruckanschluss verbunden und der dritte Anschluss ist mit der Druckseite der Aufladeeinrichtung verbunden. Es ergibt sich eine einfache Regelbarkeit und Montage. Durch eine derartige Verschaltung entsteht eine Hubregelung, da zwischen Steuerdruckraum und der Druckseite der Aufladeeinrichtung eine konstante Druckdifferenz eingestellt wird, die zu einem konstanten Öffnungsquerschnitt des Bypassventils führt.

In einer alternativen vorteilhaften Ausgestaltung ist der Mischdruckanschluss des elektropneumatischen Druckwandlers mit der Atmosphäre oder der Saugseite der Aufladeeinrichtung verbunden, der zweite Anschluss ist mit dem Steuerdruckraum des Bypassventils verbunden und der dritte Anschluss ist mit der Druckseite der Aufladeeinrichtung verbunden. Diese Anordnung bewirkt einen konstanten Öffnungsquerschnitt zwischen dem Steuerdruckraum und der Saugseite beziehungsweise der Atmosphäre bei Betätigung des Druckwandlers. Somit ändert sich der Druck im Steuerraum in Abhängigkeit von der Änderung des Druckes auf der Druckseite des Turboladers. Dies ermöglicht beispielsweise eine Glättung von Druckpulsationen des Turboladers und entspricht einer Druckregelung des Bypassventils.

Vorzugsweise ist die Steuerdruckkammer des Bypassventils zwischen einer mit dem Ventilschließkörper verbundenen Membran und einem Gehäuse des Bypassventils angeordnet. Eine derartige Ausführung ist in ihrem Aufbau besonders einfach und somit kostengünstig herzustellen und zu montieren.

Durch diese erfindungsgemäßen Ausführungen wird eine Aufladeeinrichtung mit einer Regelvorrichtung für Verbrennungskraftmaschinen geschaffen, die die oben genannten Nachteile bereits bekannter Ausführungen vermeidet, ein fehlerhaftes Schließen oder Pulsieren des Ventilschließkörpers des Bypassventils verhindert und gegebenenfalls eine vollständige Regelbarkeit ermöglicht. Somit kann jeweils eine definierte Position des Ventilschließkörpers angefahren werden und eine Gasmenge geregelt werden. Der Aufbau ist einfach und robust und die regelbaren Querschnitte des Bypassventils groß. Ein zuverlässiges und schnelles Schalten wird bei geringen notwendigen zu erzeugenden Stellkräften sicherstellt.

Ausführungsbeispiele sind in den Zeichnungen dargestellt und werden nachfolgend beschrieben.
Figur 1 zeigt eine erfindungsgemäße Regelvorrichtung mit einem Bypassventil in Seitenansicht und geschnittener Darstellung und einem als Bildzeichen dargestellten Elektromagnetventil.
Figur 2 zeigt eine alternative erfindungsgemäße Regelvorrichtung mit dem Bypassventil aus Figur 1 in Seitenansicht und geschnittener Darstellung und einem als Bildzeichen dargestellten alternativen Elektromagnetventil.

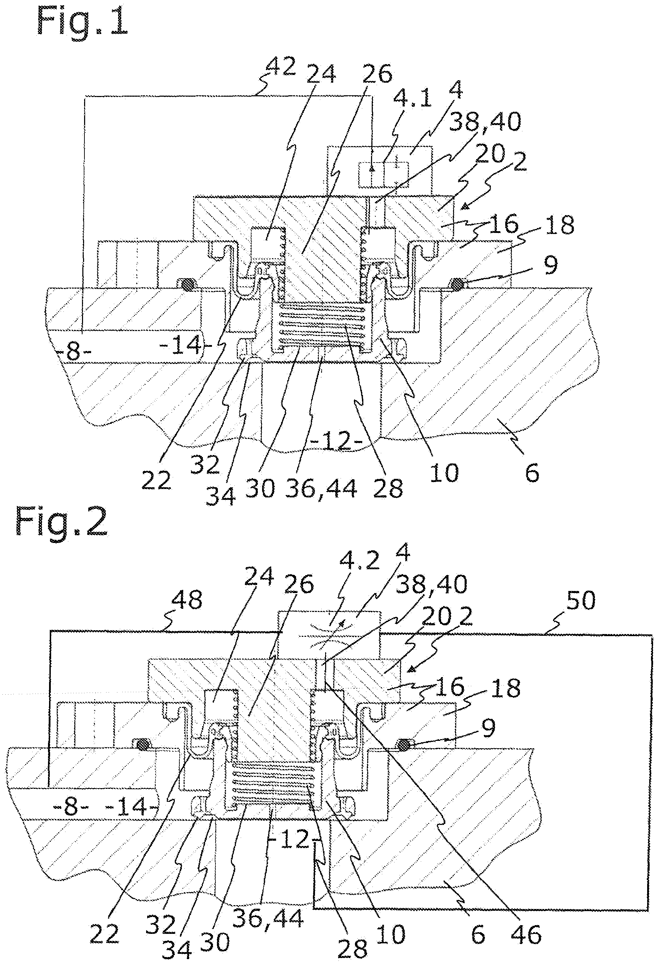

Die in Figur 1 dargestellte Regelvorrichtung besteht aus einem Bypassventil 2, welches in vorliegender Ausführung als Schubumluftventil genutzt wird, mit einem angebauten mit diesem korrespondierenden Elektromagnetventil 4, welche als Einheit direkt an ein kanalbildendes Gehäuse 6 eines als Rezirkulationskanal dienenden Bypasskanals 8 eines nicht näher dargestellten Aufladeeinrichtung eines Abgasturboladers unter Zwischenlage einer Dichtung 9 angeflanscht ist. Der Rezirkulationsbeziehungsweise Bypasskanal 8 kann entweder direkt im Gehäuse der Aufladeeinrichtung oder als externer Kanal ausgebildet sein.

Ein Ventilschließkörper 10 des Bypassventils 2 trennt eine Druckseite 12, auf der der Ventilschließkörper 10 aufliegt von einer seitlich anliegenden Saugseite 14 des Rezirkulationskanals 8 der Aufladeeinrichtung.

Das Bypassventil 2 besteht des Weiteren aus einem Ventilgehäuse 16, welches unter Zwischenlage einer Dichtung 18 am Gehäuse 6 des Rezirkulationskanals 8, beispielsweise durch Schrauben, verbunden ist. Das Ventilgehäuse 16 ist zweiteilig ausgeführt, wobei ein erstes Gehäuseteil 18, über welches die Verbindung zum Gehäuse 6 des Rezirkulationskanal hergestellt wird, das Bypassventil 2 seitlich begrenzt und ein zweites Gehäuseteil 20, welches als Deckel dient, das Bypassventil 2 an der zum Ventilschließkörper 10 entgegengesetzten Seite begrenzt. Zwischen den beiden Gehäuseteilen 18, 20 ist ein äußerer Umfangsrand einer Membran 22 eingespannt, deren innerer Rand am Ventilschließkörper 10 befestigt ist. So wird zwischen der Membran 22 und dem als Deckel dienenden zweiten Gehäuseteil 20 ein Steuerdruckraum 24 gebildet.

Vom zweiten Gehäuseteil 20 erstreckt sich ein zylinderförmiger Fortsatz 26 in den Steuerdruckraum, der als Führung für ein Federelement 28 dient, dessen erstes Ende gegen den Deckel 20 anliegt und dessen zweites Ende gegen den Ventilschließkörper 10 anliegt, an dessen innerer Fläche ebenfalls eine Erhebung 30 zur Aufnahme des zweiten Endes des Federelementes 28 angeordnet ist. Dieses Federelement 28 ist vorgespannt im Steuerdruckraum angeordnet, so dass eine Kraft in Schließrichtung auf den Ventilschließkörper 10 erzeugt wird.

Der Ventilschließkörper 10 liegt mit einer Dichtlippe 32 auf einem im Gehäuse 6 ausgebildeten Ventilsitz 34 im geschlossenen Zustand auf. Zentral am Ventilschließkörper 10 ist eine Öffnung 36 ausgebildet, über die der Raum unterhalb des Ventilschließkörpers 10, im geschlossenen Zustand also die Druckseite 12 der Aufladeeinrichtung fluidisch mit dem Steuerdruckraum 24 verbunden ist. Dies hat zur Folge, dass im Steuerdruckraum 24 bei geschlossenem Ventilgehäuse 16 der gleiche Druck wirkt wie auf der Druckseite 12 unterhalb des Ventilschließkörpers 10. Um zu einem zumindest im geschlossenen Zustand bezüglich der pneumatischen Kräfte kraftausgeglichenen Bypassventil 2 zu gelangen, entspricht die druckbelastete Wirkfläche des Ventilschließkörpers 10 und der Membran 22 von der Seite des Steuerdruckraums 24 aus der Wirkfläche unterhalb des Ventilschließkörpers 10 bis zur Dichtlippe 32. Daraus folgt, dass das Bypassventil 2 durch die anliegende Federkraft im geschlossenen Zustand gehalten wird.

Um das Bypassventil 2 auch öffnen zu können, ist am zweiten Gehäuseteil 20 eine Öffnung 38 ausgebildet, welche mit einem Eingang des Elektromagnetventils 4 fluidisch verbunden ist. Bei dem in Figur 1 dargestellten Elektromagnetventil 4 handelt es sich um ein elektrisches Umschaltventil 4.1, über welches bei Betätigung des Elektromagneten beziehungsweise Bestromen der Spule in bekannter Weise ein Querschnitt 40 freigegeben wird, über den eine fluidische Verbindung zwischen dem Steuerdruckraum 24 und der Saugseite 14 des Rezirkulationskanals 8 hergestellt wird. Dieser Querschnitt wird in der Figur beispielhaft als der ersichtliche Verbindungsquerschnitt im Deckel dargestellt, kann sich jedoch auch innerhalb des Elektromagnetventil 4 befinden. Hierzu ist am Ausgang des elektrischen Umschaltventils 4.1 eine Leitung 42 angebracht, deren entgegengesetztes Ende durch das Gehäuse 6 zum Rezirkulationskanal 8 führt.

Der kleinste Querschnitt 40 dieser fluidischen Verbindung zwischen dem Steuerdruckraum 24 und der Saugseite 14 der Aufladeeinrichtung ist dabei größer zu wählen als der Querschnitt 44 der Öffnung 36.

Dies hat zur Folge, dass bei Bestromung des Elektromagnetventils 4 und somit Öffnung des Querschnitts 40 das vorhandene Gas aus dem Steuerdruckraum 24, in dem der Druck höher ist als auf der Saugseite 14 der Aufladeeinrichtung, in Richtung zur Saugseite 14 strömt. Gleichzeitig ist die Menge einströmenden Gases aufgrund des geringeren Querschnitts 36 kleiner, so dass ein Druckabbau im Steuerdruckraum 24 stattfindet, wodurch ein Druckgefälle am Ventilschließkörper 10 auftritt, das zu einer resultierenden Kraft am Ventilschließkörper 10 beziehungsweise der Membran 22 in Öffnungsrichtung des Bypassventils 2 führt. Entsprechend wird der Ventilschließkörper 10 vom Ventilsitz 34 abgehoben und das Bypassventil 2 öffnet.

Verschiebt sich nun im Folgenden die Druckdifferenz zwischen der Druckseite 12 und der Saugseite 14 im Rezirkulationskanal 8 in Richtung eines Druckausgleichs, sinkt also das Druckgefälle im Kanal 8, verringert sich auch der Druck im Steuerdruckraum 24, da über die Öffnung 36 Gas geringeren Druckes einströmt, Es bleibt jedoch im geöffneten Zustand des elektrischen Umschaltventils 4.1 immer aufgrund der unterschiedlichen Querschnitte 40, 44 ein Druckgefälle vorhanden, welches sicherstellt, dass das Bypassventil 2 nicht ungewollt schließt.

Wird das elektrische Umschaltventil 4.1 wieder geschlossen, so erfolgt ein Druckausgleich zwischen der Unterseite des Ventilschließkörpers 10 und dem Steuerdruckraum 24. Daraus folgt ein pneumatischer Druckausgleich und somit eine Kraftausgeglichenheit bezüglich der pneumatischen Kräfte. Dies hat zur Folge, dass das Bypassventil 2 aufgrund der Kraft des Federelementes 28 geschlossen wird. Dieser Zustand der Druckausgeglichenheit bleibt bestehen bis der Querschnitt 40 durch das Umschaltventil 4.1 wieder geöffnet wird.

Die in Figur 2 dargestellte Regelvorrichtung unterscheidet sich von der in Figur 1 dargestellten lediglich durch das verwendete Elektromagnetventil 4 sowie dessen Anschlüssen, so dass für gleiche Teile gleiche Bezugszeichen verwendet werden.

Anstelle des Umschaltventils 4.1 ist an der Öffnung 40 im Deckel 20 ein elektropneumatischer Druckwandler 4.2 mit seinem Mischdruckanschluss 46 angeschlossen. Dieser elektropneumatische Druckwandler 4.2 ist mit seinen beiden anderen Anschlüssen über Leitungen 48, 50 mit der Saugseite 14 und der Druckseite 12 der Aufladeeinrichtung verbunden. Aus den dort anliegenden Drücken wird je nach Bestromung der Spule des elektropneumatischen Druckwandlers 4.2 ein Mischdruck erzeugt, der am Mischdruckanschluss 46 anliegt. Die Zuströmung des Saugseiten- oder Druckseitendruckes in den Mischdruckraum wird durch ein Doppelsitzventil in bekannter Weise reguliert.

Die jeweilige Verbindung des Mischdruckraums ist abhängig von der Position einer Ventilplatte und somit von der Position eines Tauchankers. Eine Bewegung der Ventilplatte wird durch eine Aktivierung des Elektromagneten, also durch eine Versorgung der Spule mit Strom, eingeleitet. Hierdurch wird der Tauchanker in Richtung eines Kerns gezogen, wodurch sich die Ventilplatte von einem ersten Ventilsitz abhebt, so dass der Saugseitendruck In den Mischdruckraum und somit zum Mischdruckanschluss 46 strömen kann. Hierdurch entsteht eine auf eine Membran und somit den Tauchanker wirkende Kraft in Schließrichtung, da an der entgegengesetzten Seite der Membran der Druck der Druckseite anliegt. Durch die resultierende Bewegung des Ankers in entgegengesetzter Richtung wird die Verbindung der Saugseite 14 zum Mischdruckraum wiederum unterbrochen und gegebenenfalls der Ventilsitz geöffnet, so dass eine Verbindung zur Druckseite 12 entsteht und die Kraft auf die Membran wieder fällt. Dieser Vorgang wiederholt sich bis sich im Mischdruckraum 24 entsprechend der elektromagnetischen Kraft ein Mischdruck einstellt. Es entsteht ein Gleichgewichtszustand, bei welchem die Summe aller am Tauchanker angreifenden Kräfte zu Null werden. Diese Kräfte sind somit die Zugkraft des elektromagnetischen Kreises sowie die an der Membran angreifenden pneumatischen Kräfte.

Der Elektromagnet beziehungsweise die Spule werden dabei mit einer getakteten Gleichspannung in Form eines pulsweitenmodulierten Signals versorgt. Es wird deutlich, dass zu jedem Taktverhältnis des pulsweitenmodulierten Signals ein anderer effektiver Strom erzeugt wird, der in einer Magnetkraft resultiert. Zu jeder auf diese Weise erzeugten Magnetkraft regelt sich wiederum der elektropneumatische Druckwandler auf einen neuen Mischdruck im Mischdruckraum ein.

Daraus folgt für das Bypassventil 2, das im Steuerdruckraum 24 ein regelbarer Druck anliegt. Bei vollständig geschlossenem Querschnitt ist dieser Druck der Druck von der Druckseite 12 der Aufladeeinrichtung. Zur Öffnung des Ventils 2 kann dieser Druck bis zu dem auf der Saugseite 14 anliegenden Druck abgesenkt werden, wodurch eine vollständige Öffnung des Bypassventils 2 erfolgt, der in der in Figur 1 beschriebenen Weise sichergestellt wird. Wird jedoch ein Mischdruck in der Steuerdruckkammer 24 in der beschriebenen Weise erzeugt, so entsteht ein pneumatisches Druckgefälle am Ventilschließkörper 10. Die Höhe dieses Druckgefälles lässt sich über den elektropneumatischen Druckwandler 4.2 regeln, so dass diese Druckdifferenz so eingestellt werden kann, dass für jede Stellung des Ventilschließkörpers 10 ein Kräftegleichgewicht zwischen der in Schließrichtung wirkenden Federkraft und der in Öffnungsrichtung wirkenden pneumatischen Kraft einstellbar ist. Diese Positionen sind auch durch die unterschiedlichen Drücke eindeutig definiert, da die Federkraft mit steigender Kompression stetig wächst, so dass zu jeder Stellung des Ventilschließkörpers 10 ein resultierender pneumatischer Druck und eine resultierende Federkraft existiert. Daraus folgt jedoch eine vollständige Regelbarkeit des Bypassventils 2. Auch hier ist es notwendig, dass der maximal über den elektropneumatischen Druckwandler 4.2 freigebbare Querschnitt 40 größer ist als die Öffnung 36 im Ventilschließkörper 10.

Mit den erfindungsgemäßen Ausführungsformen liegen Konstruktionen vor, durch die Regelvorrichtungen geschaffen werden, mit denen ein definiertes Öffnen und Schließen des Bypassventils sichergestellt wird. Zusätzlich ist eine vollständige Regelbarkeit erreichbar. Die notwendigen Stellkräfte sind bei großen regelbaren Querschnitten sehr gering.

Es sei darauf hingewiesen, daß auch andere Ausführungsformen der Regelvorrichtung als die in den Ausführungsbeispielen beschriebenen denkbar sind, ohne den Schutzbereich des Hauptanspruchs zu verlassen. So können beispielsweise unterschiedliche elektromagnetische Ventile verwendet werden. Des Weiteren kann in allen Ausführungen statt des Anschlusses an die Saugseite des Verdichters dieser Anschluss auch an irgendeinen vorhandenen Atmosphärenanschluss gelegt werden. Des Weiteren ist statt der zu Figur 2 beschriebenen Hubregelung auch eine Druckregelung des Ventils denkbar, indem der Mischdruckanschluss des elektropneumatischen Wandlers mit der Saugseite der Aufladeeinrichtung verbunden wird und der Steuerdruckraum mit der Druckseite verbindbar ist, so dass bei Bestromung jeweils ein definierter Querschnitt zwischen Saug- und Druckseite freigegeben wird. Auch ist ein vergleichbares Ventil sowohl als Waste-Gate-Ventil als auch als Schubumluftventil verwendbar. Die konstruktive Ausführung des Bypassventils ist ebenfalls änderbar.

## Patentansprüche

1. Aufladeeinrichtung für Verbrennungskraftmaschinen mit einer Regelvorrichtung,
welche an einem kanalbildenden Gehäuse (6) eines als Rezirkulationskanal dienenden Bypasskanals (8) zwischen der Druckseite (12) und der Saugseite (14) der Aufladeeinrichtung angeordnet ist, mit
einem Elektromagnetventil (4) und
einem Bypassventil (2), welches ein erstes Gehäuseteil (18), über welches die Verbindung zum Rezirkulationskanal hergestellt ist und welches das Bypassventil (2) seitlich begrenzt und ein zweites Gehäuseteil (20) aufweist, welches als Deckel dient und das Bypassventil an der gegenüberliegenden Seite begrenzt, und einen pneumatisch betätigbaren Ventilschließkörper (10) und einen Steuerdruckraum (24) aufweist,
**dadurch gekennzeichnet, dass**
im zweiten Gehäuseteil (20) eine Öffnung (38) ausgebildet ist, wobei über einen freigebbaren Querschnitt (40) des Elektromagnetventils (4) eine fluidische Verbindung zwischen der Druckseite (12) und der Saugseite (14) der Aufladeeinrichtung oder der Atmosphäre über den Steuerdruckraum (24) und die Öffnung (38) im zweiten Gehäuseteil (20) des Bypassventils (2) herstellbar und verschließbar ist, wobei am Ventilschließkörper (10) zumindest eine Öffnung (36) ausgebildet ist, über die die fluidische Verbindung zwischen der Druckseite (12) der Aufladeeinrichtung und dem Steuerdruckraum (24) besteht und wobei der über das Elektromagnetventil (4) freigebbare Querschnitt (40) größer ist als ein Querschnitt (44) der Öffnung (36) am Ventilschließkörper, wobei
im vollständig geöffneten Zustand des Bypassventils (2) zumindest zeitweise die fluidische Verbindung zwischen der Druckseite (12) und der Saugseite (14) der Aufladeeinrichtung oder der Atmosphäre über den Steurdruckraum (24), die Öffnung (38) im zweiten Gehäuseteil (20) und den Querschnitt (40) besteht und durch Verschluss der fluidische Verbindung über den Steuerdruckraum (24), die Öffnung (38) im zweiten Gehäuseteil (20) und den Querschnitt (40) eine resultierende Kraft in Schließrichtung auf den Ventilschließkörper (10) wirkt, und das Bypassventil (2) im geschlossenen Zustand druckausgeglichen ist, so dass die resultierende Kraft der auf den Ventilschließkörper (10) wirkenden pneumatischen Kräfte bei geschlossenem Bypassventil (2) gleich Null ist.

2. Aufladeei richtung für Verbrennungskraftmaschinen nach Anspruch 1, **dadurch gekennzeichnet, dass**
im geöffneten Zustand des Bypassventils (2) über das Elektromagnetventil (4) ein konstanter Querschnitt (40) zwischen dem Steuerdruckraum (24) und der Saugseite (14) der Aufladeeinrichtung oder der Atmosphäre freigegeben ist, der größer ist als die zumindest eine Öffnung (36) im Ventilschließkörper (10).

3. Aufladeeinrichtung für Verbrennungskraftmaschinen nach Anspruch 2, **dadurch gekennzeichnet, dass**
das Elektromagnetventil (4) ein elektrisches Umschaltventil (4.1) ist.

4. Aufladeeinrichtung für Verbrennungskraftmaschinen nach Anspruch 1, **dadurch gekennzeichnet, dass**
der über das Elektromagnetventil (4) freigebbare Querschnitt (40) zwischen dem Steuerdruckraum (24) und der Saugseite (14) der Aufladeeinrichtung oder der Atmosphäre regelbar Ist.

5. Aufladeeinrichtung für Verbrennungskraftmaschinen nach Anspruch 4, **dadurch gekennzeichnet, dass**
das Elektromagnetventil (4) ein elektropneumatischer Druckwandler (4.2) mit einem Mischdruckanschluss (46) und zwei weiteren Anschlüssen ist.

6. Aufladeeinrichtung für Verbrennungskraftmaschinen nach Anspruch 5, **dadurch gekennzeichnet, dass**
der Mischdruckanschluss (46) des elektropneumatischen Druckwandlers (4.2) mit dem Steuerdruckraum (24) des Bypassventils (2) verbunden ist, der zweite Anschluss mit der Saugseite (14) der Aufladeeinrichtung oder einem Atmosphärendruckanschluss verbunden ist und der dritte Anschluss mit der Druckseite (12) der Aufladeeinrichtung verbunden ist.

7. Aufladeeinrichtung für Verbrennungskraftmaschinen nach Anspruch 5, **dadurch gekennzeichnet, dass**
der Mischdruckanschluss (46) des elektropneumatischen Druckwandlers (4.2) mit der Atmosphäre oder der Saugseite (14) der Aufladeeinrichtung verbunden ist, der zweite Anschluss mit dem Steuerdruckraum (24) des Bypassventils (2) verbunden ist und der dritte Anschluss mit der Druckseite (12) der Aufladeeinrichtung verbunden ist.

8. Aufladeeinrichtung für Verbrennungskraftmaschinen nach einem der vorhergehenden Ansprüche,
**dadurch gekennzeichnet, dass**
die Steuerdruckkammer (24) des Bypassventils (2) zwischen einer mit dem Ventilschließkörper (10) verbundenen Membran (22) und einem Ventilgehäuse (16) des Bypassventils (2) angeordnet ist.

## Claims

1. A supercharging device for internal combustion engines having a control device,
which is arranged at a duct-forming housing (6) of a bypass duct (8) between the pressure side (12) and the intake side (14) of a supercharging device, said bypass duct serving as a recirculation duct, comprising
a solenoid valve (4), and
a bypass valve (2) having a first housing part (18), via which a connection to the recirculation duct is established and which delimits the bypass valve (2) laterally, and a second housing part (20) serving as a cover and delimiting the bypass valve on the opposite side, and having a pneumatically actuatable valve-closure body (10) and a control pressure space (24),
**characterized in that**
an opening (38) is formed in the second housing part (20), wherein, via a cross section (40) of the solenoid valve (4) adapted to be opened, a fluidic connection can be established and closed between the pressure side (12) and the intake side (14) of the supercharging device or atmosphere via the control pressure space (24) and the opening (38) in the second housing part (20) of the bypass valve (2), wherein the valve-closure body (10) is formed with at least one opening (36) through which the fluidic connection between the pressure side (12) of the supercharging device and the control pressure space (24) exists, and wherein the cross section (40) adapted to be opened via the solenoid valve (4) is larger than a cross section (44) of the opening (36) at the valve-closure body, wherein
in the completely opened state of the bypass valve (2), the fluidic connection is present at least temporarily between the pressure side (12) and the intake side (14) of the supercharging device or atmosphere via the control pressure space (24), the opening (38) in the second housing part (20) and the cross section (40), and a closure of the fluidic connection via the control pressure space (24), the opening (38) in the second housing part (20) and the cross section (40) brings about a resulting force on the valve-closure body (10) in the closing direction, and the bypass valve (2) is pressure compensated in the closed state so that the resulting force of the pneumatic forces acting on the valve-closure body (10) is equal to zero in the closed state of the bypass valve (2).

2. The supercharging device for internal combustion engines as defined in claim 1, **characterized in that** in the open state of the bypass valve (2), a constant cross section (40) is cleared between the control pressure space (24) and the intake side (14) of the supercharging device or atmosphere via the solenoid valve (4), which cross section is larger than said at least one opening (36) in the valve-closure body (10).

3. The supercharging device for internal combustion engines as defined in claim 2, **characterized in that** the solenoid valve (4) is an electric switchover valve (4.1).

4. The supercharging device for internal combustion engines as defined in claim 1, **characterized in that** the cross section (40) adapted to be cleared via the solenoid valve (4) between the control pressure space (24) and the intake side (14) of the supercharging device or atmosphere is adjustable.

5. The supercharging device for internal combustion engines as defined in claim 4, **characterized in that** the solenoid valve (4) is an electropneumatic pressure transducer (4.2) with a mixed pressure port (46) and two further ports.

6. The supercharging device for internal combustion engines as defined in claim 5, **characterized in that** the mixed pressure port (46) of the electropneumatic pressure transducer (4.2) is connected to the control pressure space (24) of the bypass valve (2), the second port is connected the intake side (14) of the supercharging device or an atmospheric pressure port, and the third port is connected to the pressure side (12) of the supercharging device.

7. The supercharging device for internal combustion engines as defined in claim 5, **characterized in that** the mixed pressure port (46) of the electropneumatic pressure transducer (4.2) is connected to atmosphere or the intake side (14) of the supercharging device, the second port is connected to the control pressure space (24) of the bypass valve (2) and the third port is connected to the pressure side (12) of the supercharging device.

8. The supercharging device for internal combustion engines of one of the preceding claims, **characterized in that** the control pressure space (24) of the bypass valve (2) is arranged between a membrane (22) connected to the valve-closure body (10) and a valve housing (16) of the bypass valve (2).

## Revendications

1. Dispositif de suralimentation pour moteurs à combustion interne, comprenant un dispositif de commande,
qui est disposé sur un boitier (6), formant conduite, d'une conduite de dérivation (8), servant comme conduite de recirculation, entre le côté pression (12) et le côté aspiration (14) du dispositif de suralimentation, comportant
une vanne électromagnétique (4) et
une vanne de dérivation (2) avec une première partie de boitier (18), par laquelle la liaison avec la conduite de recirculation est réalisée et qui limite la vanne de dérivation (2) latéralement, et avec une deuxième partie de boitier (20) servant comme couvercle et limitant la vanne de dérivation sur le côté opposé et comportant un corps de fermeture de vanne (10) pneumatique et une chambre de pression de commande (24),
**caractérisé en ce**
**qu'**une ouverture (38) est formée dans la deuxième partie de boitier (20), et que, par une section transversale (40) de la vanne électromagnétique (4), apte à être libérée, une liaison fluidique peut être réalisée et fermée entre le côté pression (12) et le côté aspiration (14) du dispositif de suralimentation ou l'atmosphère à travers la chambre de pression de commande (24) et l'ouverture (38) formée dans la deuxième partie de boitier (20) de la vanne de dérivation (2), au moins une ouverture (36) étant formée au corps de fermeture de vanne (10) à travers laquelle la liaison fluidique entre le côté pression (12) du dispositif de suralimentation et la chambre de pression de commande (24) existe, et la section transversale (40) apte à être libérée par la vanne électromagnétique (4) est plus grande qu'une section transversale (44) de l'ouverture (36) au corps de fermeture de vanne,
en état complètement ouvert de la vanne de dérivation (2), la liaison fluidique entre le côté pression (12) et le côté aspiration (14) du dispositif de suralimentation ou l'atmosphère existant, au moins temporairement, à travers la chambre de pression de commande (24), l'ouverture (38) dans la deuxième partie du boitier (20) et la section (40), et par fermeture de la liaison fluidique existant à travers la chambre de pression de commande (24), l'ouverture (38) dans la deuxième partie du boitier (20) et la section (40), une force résultante agissant sur le corps de fermeture de vanne (10) dans la direction de fermeture, et en état fermé, la vanne de dérivation (2) étant équilibrée en pression de sorte qu'en état fermé de la vanne de dérivation (2), la force résultante des forces pneumatiques agissant sur le corps de fermeture de vanne (10) est égale à zéro.

2. Dispositif de suralimentation pour moteurs à combustion interne selon la revendication 1, **caractérisé en ce qu'**en état ouvert de la vanne de dérivation (2), la vanne électromagnétique (4) libère une section transversale (40) constante entre la chambre de pression de commande (24) et le côté aspiration (14) du dispositif de suralimentation ou l'atmosphère, qui est plus grande que la au moins une ouverture (36) dans le corps de fermeture de vanne (10).

3. Dispositif de suralimentation pour moteurs à combustion interne selon la revendication 2, **caractérisé en ce que** la vanne électromagnétique (4) est une vanne de commutation (4.1) électrique.

4. Dispositif de suralimentation pour moteurs à combustion interne selon la revendication 1, **caractérisé en ce que** la section transversale (40) pouvant être libérée par la vanne électromagnétique (4) entre la chambre de pression de commande (24) et le côté aspiration (14) du dispositif de suralimentation ou l'atmosphère est réglable.

5. Dispositif de suralimentation pour moteurs à combustion interne selon la revendication 4, **caractérisé en ce que** la vanne électromagnétique (4) est un capteur de pression (4.2) électropneumatique avec un raccord de pression de mélange (46) et deux autres raccords.

6. Dispositif de suralimentation pour moteurs à combustion interne selon la revendication 5, **caractérisé en ce que** le raccord de pression de mélange (46) du capteur de pression (4.2) électropneumatique est relié à la chambre de pression de commande (24) de la vanne de dérivation (2), le deuxième raccord est relié au côté aspiration (14) du dispositif de suralimentation ou un raccord de pression atmosphérique, et le troisième raccord est relié au côté pression (12) du dispositif de suralimentation.

7. Dispositif de suralimentation pour moteurs à combustion interne selon la revendication 1, **caractérisé en ce que** le raccord de pression de mélange (46) du capteur de pression (4.2) électropneumatique est relié à l'atmosphère ou au côté aspiration (14) du dispositif de suralimentation, le deuxième raccord est relié à la chambre de pression de commande (24) de la vanne de dérivation (2), et le troisième raccord est relié au côté pression (12) du dispositif de suralimentation.

8. Dispositif de suralimentation pour moteurs à combustion interne selon l'une quelconque des revendications précédentes, **caractérisé en ce que** la chambre de pression de commande (24) de la vanne de dérivation (2), est disposée entre une membrane (22) reliée au corps de fermeture de vanne (10) et un boitier de vanne (16) de la vanne de dérivation (2).
